# FASCICULE DE BREVET EUROPEEN

(11) **EP 2 172 113 B1**
(45) Date de publication et mention de la délivrance du brevet: **19.03.2014**
(21) Numéro de dépôt: 08380280.1
(22) Date de dépôt: 29.09.2008
(51) Int. Cl.: A23G 1/32, A23G 1/42

(54) **Aliment Au Chocolat fonctionel et nutrifit**
Funktionelles und nahrhaftes Nahrungsmittel auf Schokoladenbasis
Functional and nutritional food product containing chocolate

(43) Date de publication de la demande: 07.04.2010
(73) Titulaire: Fernandez Jimenez, Maria Ascension, 28660 Boadilla del Monte, Madrid (ES)
(72) Inventeur: Fernandez Jimenez, Maria Ascension, 28660 Boadilla del Monte, Madrid (ES)
(74) Mandataire: Manzano Cantos, Gregorio

(56) Documents cités:
- EP-A- 1 817 964
- EP-A- 1 922 940
- BE-A7- 1 016 055
- US-A- 4 652 458
- US-A- 5 925 399
- US-A1- 2007 059 401
- US-A1- 2007 269 493
- US-A1- 2008 038 410
- LOIC LE RIBAULT: "G5 Silicium organique à multiples effets thérapeutiques" [Online] 4 février 2005 (2005-02-04), , XP002436995 Extrait de l'Internet: URL:http://web.archive.org/web/20050204030 605/www.epanouissement.net/div/ g5.html> [extrait le 2007-06-08] * le document en entier *
- "LE SILICIUM ORGANIQUE FORMULE G5 ORIGINALE" [Online] 13 février 2006 (2006-02-13), , XP002420546 Extrait de l'Internet: URL:http://web.archive.org/web/20060213042 322/www.bioticas.com/index.cfm? inc=products&id=2> [extrait le 2007-02-15] * le document en entier *
- JUGDAOHSINGH RAVIN ET AL: "Dietary silicon intake and absorption" 1 mai 2002 (2002-05-01), AMERICAN JOURNAL OF CLINICAL NUTRITION, BETHESDA,MD, US, PAGE(S) 887 - 893 , XP002420579 ISSN: 0002-9165 * le document en entier *

## Description

### OBJET DE L'INVENTION

L'invention a pour but la création d'un produit original, qui est totalement nouveau et qui consiste en un aliment fonctionnel, parce que, outre les qualités nutritionnelles propres de l'aliment, il apporte des bénéfices physiologiques dérivés des substances qui l'intègrent.

US 5 925 399 décrit un aliment au chocolat qui est une composition mélangée de divers ingrédients caractérisé en ce qu'il a un apport principal d'un oligo-élément à base de silicium (0,025-0,4%), il comprend une quantité de base de cacao auquel on ajoute du calcium (lait) et un reste de beurre de cacao et de la lécithine.

L'invention concerne un produit alimentaire avec la texture d'un bonbon ou une portion de ce type à base de cacao qui contient plus de 70% de cacao (pur, naturel en poudre), auquel on ajoute du calcium (carbonate) et de la vitamine D3 et un oligo-élément à base d'une petite portion de silicium qui est mélangé ave du beurre de cacao et de la lécithine de soja.

Comme il est connu le chocolat et les dérivés du cacao sont riches en graisses, hydrates de carbone et beurre de cacao, qui contiennent une grande proportion d'acide stéarique, un acide gras saturé qui, à la différence d'autres acides gras, n'augmente pas le niveau de cholestérol dans le sang.

Pour cela, lesdits acides sont une bonne source de vitamines (thiamine ou B1 et acide folique) et d'éléments minéraux comme le potassium, le phosphore, le magnésium. Si le chocolat est au lait, ou le cacao se dissout dans le lait, l'apport de calcium augmente remarquablement.

Le composé de l'invention apporte également d'autres substances comme la théobromine, qui a un pouvoir stimulant significatif, et des composés phénoliques du type catéchine, épicatéchine et flavonols comme la quercétine. Lesdites substances contribuent à éviter l'oxydation du cholestérol dans le sang et ils ont été mis en rapport avec la prévention de troubles cardiovasculaires et la stimulation des défenses de l'organisme.

### ANTÉCÉDENTS DE L'INVENTION

Historiquement on connaît la valeur nutritive et tonifiante de ce type d'aliments ou boissons, qui permettait aux forces conquérantes du XVe siècle d'être toute la journée en train de marcher sans aucun autre aliment, il favorisa et étendit sa culture. Les experts en nutrition considèrent que la consommation du cacao dans ses diverses variétés est recommandable, dans une diète équilibrée et dans des quantités modérées, pour des personnes saines de tout âge.

De même, ils sont divers les produits connus à base de cacao qui contiennent diverses compositions dans lesquelles interviennent des substances aussi bien typiquement alimentaires et nutritives que d'autres mélanges ayant des portés pour différentes saveurs, présentations ou des combinaisons diverses, mais il n'y en a aucun dont la composition ait des similitudes ou un but similaire à la proposée.

### DESCRIPTION DE L'INVENTION

Dans la pratique, on a pu vérifier que les personnes à partir d'un certain âge laissent de consommer du lait et des dérivés laitiers source primordiale d'apport de calcium (carbonate) pour éviter l'ostéoporose et réduire le risque de fractures.

Ainsi l'objet de l'invention a comme originalité essentielle le fait d'apporter un composé de cacao incluant du calcium et de la vitamine D3 et un oligo-élément fondamental pour pouvoir absorber ledit minéral.

Il y a diverses études, outre ce qui a été précité, qui affirment que l'apport de calcium dans la diète aide à contrôler le poids, réduit de 48% la sévérité du syndrome prémenstruel, réduit de 33% le risque de souffrir de diabètes de type 2. L'invention propose de prendre une dose ou portion du produit avec la participation nécessaire de calcium et de vitamine D3 pour toutes les personnes qui n'arrivent pas au minimum quotidien de calcium qui est estimé à environ 1.200 - 1.200 mg et de 600-800 UI de vitamine D, de préférence élevé à 10⁻³% pour favoriser l'absorption. En association au plaisir de prendre une dose du produit on garantit la fidélité du traitement. On ajoute aussi une petite quantité d'oligo-élément à base de silicium organique liquide de 5^{ème} (G5), pour maintenir les dépôts entre 30 et 80 g. au maximum pour une composition de 1.000 g.

Une autre idée de l'invention ce sont les options d'édulcoration du produit à base de sucres ou d'autres appropriés pour les diabétiques, incluant une participation minimale de produit salin comme agglutinant.

Un autre détail de l'invention est que la concentration à 100% de la composition du produit fournirait la suivante proportion :
70-75 % de cacao
4-6 % de calcium (carbonate)
6-8 10⁻³ % de vitamine D3
0,3- 0,8 % de silicium organique liquide (Si) à 0,4% - 6,0 %
15,4-17,6 % de beurre de cacao.
3,0-5,0 % de lécithine de soja

Dans laquelle le cacao serait à l'état pulvérulent, le calcium (carbonate) également en poudre moulue, la vitamine D3 huileuse et le silicium organique à l'état liquide ; le beurre de cacao à l'état crémeux et la lécithine de soja à l'état pulvérulent, lesquelles se mélangent entre eux, se dissolvent et s'agglutinent.

Un autre détail de l'invention est que pour une composition de 1 kg (1.000 g) de produit, le pourcentage de capacité de chacun des ingrédients serait de :
700-750 g. de cacao
40-60 g. de calcium (carbonate)
30.000 40.000 UI ou 0,6- 0,8 10⁻³ g. de vitamine D3
30-80 g. à 0,4%-0,6% de silicium organique liquide de génération (G5).
177,4-185,6 g. de beurre de cacao
3,0-5,0 g. de lécithine de soja.

Les variables de participation du calcium (carbonate); de la vitamine D3 ou du silicium organique liquide seront compensées avec la marge prévue dans le cacao. En augmentant ces proportions on les déduira.

Une fois décrite convenablement la nature de l'invention, on constate aux effets opportuns, que celle-ci ne se limite pas aux détails exacts de cet exposé, mais au contraire, dans celle-ci on introduira les modifications considérées opportunes, si toutefois elles n'altèrent pas les caractéristiques essentielles de celle-ci, qui sont revendiquées à la suite.

## Revendications

1. ALIMENT AU CHOCOLAT FONCTIONNEL ET NUTRITIF qui est une composition mélangée de divers ingrédients alimentaires avec aspect de chocolat et qui est **CARACTÉRISÉ en ce qu'**il comprend essentiellement un oligo-élément tel qu'apport principal, à base de silicium organique liquide de 5^{ème} génération (5G) avec participation de 0,4%- 0,6%, qu'il comprend une quantité de base de cacao auquel on ajoute du calcium (carbonate) à 4-6% et 6-8 10⁻³% de vitamine D3 et un reste en pourcentage de beurre de cacao et de la lécithine de soja, le tout mélangé et agglutiné.

## Patentansprüche

1. Funktionelles und nahrhaftes schokoladennahrungsmittel, welches eine gemischte Zusammensetzung aus verschiedenen Nahrungszutaten mit Schokoladenoptik ist, **dadurch gekennzeichnet, dass** es im Wesentlichen einen Hauptbeitrag eines Spurenelements auf Grundlage von flüssigem, organischem Silizium fünfter Generation (5G) mit einem Anteil von 0,4 % bis 0,6 % umfasst, und dass es eine Grundmenge an Kakao umfasst, der 4-6 % Calcium(carbonat), 6-8·10⁻³ % Vitamin D und ein restlicher prozentualer Anteil an Kakaobutter und Sojalecithin beigefügt werden, wobei all dies vermischt und abgebunden wird.

## Claims

1. Functional and nutritional chocolate food which is a mixed composition of various food ingredients having a chocolate appearance and that is **CHARACTERIZED in that** it essentially comprises a portion of 0.4 % - 0.6 % trace element, which constitutes the main contribution thereto, wherein the trace element is a liquid organic silicon, of the 5^{th} generation (5G), comprising a base amount of cocoa, to which 4-6 % calcium (carbonate), 6-8·10⁻³ % vitamin D, and the remaining percentage, constituted by cocoa butter and soy lecithin, is added, all mixed together and agglutinated.
